# EUROPÄISCHE PATENTSCHRIFT

(11) **EP 2 158 386 B1**
(45) Veröffentlichungstag und Bekanntmachung des Hinweises auf die Patenterteilung: **12.07.2017**
(21) Anmeldenummer: 07819480.0
(22) Anmeldetag: 25.10.2007
(51) Int. Cl.: F02B 39/10, H02K 5/128, H02K 7/14, H02K 7/18, F02C 6/12, F02B 37/10

(54) **TURBOLADER**
TURBOCHARGER
TURBOCOMPRESSEUR

(30) Priorität: 24.05.2007 EP 07090100; 20.06.2007 EP 07075496; 01.08.2007 EP 07075661
(43) Veröffentlichungstag der Anmeldung: 03.03.2010
(73) Patentinhaber: Lindenmaier GmbH, 88487 Baltringen (DE); SycoTec GmbH & Co. KG, 88299 Leutkirch im Allgäu (DE)
(72) Erfinder: GÖDEKE, Holger, 88480 Achstetten (DE); LÖFFLER, Rudolf, 88454 Unteressendorf (DE); HEBER, Ralf, 89155 Erbach-Ersingen (DE); BISCHOF, Thomas, 87758 Illerbeuren (DE); MAIER, Sandra, 88410 Bad Wurzach (DE); KÄMPFER, Oliver, 87700 Memmingen (DE)
(74) Vertreter: Pfenning, Meinig & Partner mbB
(86) Internationale Anmeldenummer: PCT/EP2007/009446
(87) Internationale Veröffentlichungsnummer: WO 2008/141670

(56) Entgegenhaltungen:
- EP-A1- 0 642 210
- EP-A1- 1 995 426
- EP-A1- 1 995 427
- EP-A1- 1 995 429
- EP-A2- 1 182 346
- WO-A-2005/119027
- DE-A1- 3 339 918
- DE-A1-102005 010 921
- JP-A- 5 316 702
- US-A- 5 473 211

## Beschreibung

Die Erfindung bezieht sich auf Turbolader.

Verbrennungskraftmaschinen mit Turboladern sind prinzipiell bekannt. Typischerweise wird ein Abgasstrom aus einer Verbrennungskraftmaschine heraus genutzt, um ein Turbinenrad anzutreiben. Dieses Turbinenrad ist beispielsweise über eine Welle mit einem Verdichterrad gekoppelt, das eine Verdichtung von zugeführter Frischluft in dem Brennraum sicherstellt. Eine solche Vorverdichtung bzw. "Aufladung" führt zu einer erhöhten Motorleistung bzw. erhöhtem Drehmoment gegenüber herkömmlichen Verbrennungskraftmaschinen. Allerdings besteht bei derartig aufgeladenen Verbrennungskraftmaschinen das Problem des so genannten "Turbolochs", das insbesondere beim Anfahren und Beschleunigen aus niedrigen Drehzahlen eines Fahrzeugs, also wenn die Verbrennungskraftmaschine rasch in Bereiche höherer Leistung beschleunigt werden soll, auftritt. Dies rührt daher, dass der erhöhte Luftmengenbedarf auf der Luftzuführseite nur mit einer Verzögerung bereitgestellt werden kann (unter anderem bedingt durch die Trägheit des Systems Turbinenrad-Verdichterrad).

Ein Turbolader gemäß den Stand der Technik ist aus EP1 182 346 A2 bekannt. Es ist daher die Aufgabe der vorliegenden Erfindung, einen Turbolader zur Verfügung zu stellen, der mit geringstmöglicher Verzögerung die genau richtige Menge Frischluft zuführt, und der darüber hinaus im Aufbau einfach und möglichst wenig störanfällig ist.

Diese Aufgabe wird durch die Gegenstände der unabhängigen Patentansprüche gelöst.

Die Erfindung betrifft einen Turbolader mit einer Verdichteranordnung zur Verdichtung von Frischluft für Verbrennungskraftmotoren, enthaltend ein Verdichterrad sowie ein Elektromotor mit Rotor und Stator, wobei ein Rotormagnet des Rotors so ausgebildet ist, dass er partiell oder auch komplett in das Verdichterrad integriert ist (also dass Rotormagnet bzw. Rotor einerseits und Verdichterrad andererseits miteinander verbunden sind) und der kleinste Innendurchmesser des Stators 1,5 bis 8 mal so groß ist wie der größte Außendurchmesser des Rotors. Die angegebenen Längen beziehen sich hierbei jeweils auf die größten Ausdehnungen bzw. kleinsten Ausdehnungen der beteiligten Elemente, allerdings lediglich im Bereich der elektrisch bzw. magnetisch wirksamen Elemente, d.h. beispielsweise nur über die Länge des Rotormagneten) .

Im Kontext der vorliegenden Anmeldung werden unter "Turboladern" sämtliche Mittel verstanden, die einer Verbrennungskraftmaschine vorkomprimierte Verbrennungsluft zuführen können, wodurch eine größere Luftmasse in den Brennraum gelangt. (eine klassische Verdichterrad-Turbinenrad-Kopplung ist also nicht zwingend erforderlich).

Die Erfindung betrifft außerdem einen Turbolader, enthaltend mindestens ein Verdichterrad, wobei das Verdichterrad über mindestens einen Elektromotor antreibbar ist und der Elektromotor einen Rotor, einen Stator sowie einen Rotorspalt zwischen Rotor und Stator aufweist und der Rotorspalt so ausgestaltet ist, dass bei rotierendem Verdichterrad mindestens 50%, vorzugsweise mindestens 90% des zu verdichtenden Luftmassenstroms durch den Rotorspalt geführt werden.

Die genannten Prozentzahlen geben jeweils Mindestbereiche an. Die Prozentzahlen gelten hierbei prinzipiell für den gesamten Drehzahlbereich des Turboladers bzw. eines daran angeschlossenen Verbrennungskraftmotors.

In einer besonders vorteilhaften Weiterbildung soll der gesamte Luftstrom, der dem jeweiligen Verdichterrad zugeführt wird, durch diesen Rotorspalt geführt werden.

Die zahlenwertmäßige Abgrenzung hat unter anderem auch den Sinn, dass unerwünschte bzw. "zufällige" Leckströmungen, wie sie im Stand der Technik vorkommen könnten, entsprechend ausgeschlossen werden. Eine "Rezirkulationsströmung" zwischen Rotor und Stator bei Gegenständen nach dem Stand der Technik, bei denen der Rotor auf der Außenseite des Verdichterrades, sehr nahe zu dem Stator, angebracht ist, soll allerdings nicht als "zu verdichtender Luftmassenstrom" gesehen werden, da eine solche "Rezirkulationsluft" das Verdichterrad streng genommen bereits passiert hat.

Vorteilhaft ist eine "integrale" Bauform, bei der ein großer Teil des zu verdichtenden Luftmassenstroms bzw. sogar der gesamte zu verdichtende Luftmassenstrom dem mindestens einen Verdichterrad durch den Rotorspalt zugeführt wird.

Im Gegensatz zur Anbringung von Rotoren auf den radialen Außenseiten des Verdichterrades ist es vorteilhaft, den Rotor bzw. seine magnetisch wirksamen Teile möglichst nah an der Drehachse des Verdichterrades anzuordnen. Dies ist zum einen bei schnell laufenden Turboladern aus mechanischer Sicht sehr günstig, da hier durch hohe bzw. sich schnell ändernde Fliehkräfte sonst unter Umständen mechanische Beschädigungen auftreten könnten. Auch vorteilhaft ist, dass die Drehträgheitsmomente auf diese Weise relativ niedrig gehalten werden können, da radial außen liegende Magnete üblicherweise ein hohes spezifisches Gewicht und somit ein sehr hohes Drehträgheitsmoment aufweisen. Dadurch kann das instationäre Verhalten des Verdichters erheblich verbessert werden. Hinzu kommt bei am Verdichterrad außen liegenden Magneten, dass diese auch thermisch stärker beansprucht werden, da an diesen Außenseiten starke Erwärmungen durch die Kompressionsarbeit entstehen können, die sich wiederum nachteilig auf die Lebensdauer der Magnete des Rotors auswirken können.

Aus der Literatur sind Turbolader bekannt, die zur Stromerzeugung verwendet werden. Diese Turbloader sind als kleine Gasturbinen ausgebildet und verfügen ebenfalls über eine Turbine sowie einen starr gekoppelten Verdichter. Auf der Läuferwelle der Turbine ist ein konventioneller Generator zur Stromerzeugung angeflanscht. Da der Generator innerhalb des Ansaugtraktes angeordnet ist, stellt er eine hohen Strömungswiderstand dar, der den Wirkungsgrad senkt und gleichzeitig treten sehr hohe Beanspruchungen an den Lagerkomponenten auf.

Eine vorteilhafte Weiterbildung des erfindungsgemäßen Turboladers sieht vor, diesen z.B. als Mikroturbine für die Kraft-Wärme- oder Kraft-Kälte-Kopplung zu verwenden. Dabei strömt die Verbrennungsluft zwischen Rotor und Stator des Elektromotors/Generators in den Verdichter und wird dort komprimiert und somit vorgewärmt auf ca. 200°C. In einem Wärmetauscher wird die vorgewärmte, komprimierte Luft durch das heiße Abgas auf ein höheres Temperaturniveau gebracht. In einer nachgeschalteten Brennkammer wird die komprimiert, warme Luft gemeinsam mit einem Brennstoff z.B. regenerativem Gas verbrannt. Die so entstandenen heißen Gase werden in der Turbine entspannt und treiben das Turbinenrad und somit den Verdichter sowie den Generator an. Die Wärmeenergie des Abgases wird teilweise in dem Wärmetauscher direkt wieder an die komprimierte Verbrennungsluft abgegeben. Darüber hinaus kann dieser erfindungsgemäße Turbolader mit einem zweiten Wärmetauscher gekoppelt werden um die gesamte Restwärme zur Warmwassererzeugung zu nutzen oder sie einem Heizkreis z.B. für die Gebäudetemperierung zuzuführen. Zum Starten des Prozesses kann der Generator als Elektromotor verwendet. Somit können mit dem erfindungsgemäßen Turbolader beispielsweise kostengünstige kleine Blockheizkraftwerke erzeugt werden, deren wesentlichen Komponenten aus Grosserienbauteile bestehen.

Eine vorteilhafte Weiterbildung sieht vor, dass die Masse des Rotormagneten zwischen 5g und 1000g beträgt, vorzugsweise zwischen 10 und 100g für Automobilturbolader. Das Massenträgheitsmoment der magnetisch (aktiv) wirksamen Masse des Elektromotors bezüglich der Drehachse des Rotors beträgt hierbei zwischen 0,1 kgmm² und 10kgmm², vorzugsweise zwischen 0,3 kgmm² und 1,0 kgmm² für Automobilanwendungen.

Dadurch, dass relativ große Luftspalte bei dem erfindungsgemäßen Rotorspalt möglich sind, sind also sowohl Massen als auch Massenträgheitsmomente der elektrisch bzw. magnetisch wirksamen Motorbestandteile klein, es bildet sich trotzdem ein sehr homogenes Feld.

Eine weitere vorteilhafte Weiterbildung sieht vor, dass das Verdichterrad auf einer Achse gelagert ist und Schaufeln enthält, wobei die Vorderkanten der Schaufeln (also der Abschnitt des Verdichterrades, auf den die Luft zuerst trifft) in Lufteinlassströmungsrichtung stromabwärts bezüglich eines magnetisch wirksamen Vorderabschnitts des Rotors und/oder eines magnetisch wirksamen Vorderabschnitts des Stators liegen.

Dies heißt also, dass die aktiven Komponenten des Elektromotors (Rotor bzw. Stator) axial noch stärker zum Lufteinlass hin angeordnet sind und das eigentliche Verdichterrad stromabwärts angeordnet ist. Hierdurch wird es unter anderem auch möglich, die gesamte dem Verdichterrad zuzuführende Einlassluft durch den Rotorspalt zu führen.

Es ist jedoch auch konstruktiv möglich den Rotor in das Verdichterrad oder gar auf der Turbinenrad zugewandten Seite des Verdichterrades zu applizieren um das Biegemoment auf der Verdichterwelle zu verringern, dennoch wird der zu verdichtenden Luftmassenstrom primär durch den Rotorspalt durchgeführt.

Ein Mischverbau mehrerer verschiedener Rotormagnete an unterschiedlichen Stellen des Verdichterrades (vor, innerhalb und/ oder hinter) ermöglicht eine Optimierung des notwendigen Bauraums bei gleichzeitiger Optimierung des Motordrehmoments und Verringerung der Biegebeanspruchung der Läuferwelle. Dabei muss die Form des Rotors/Stators nicht zwangsläufig kreiszylindrisch sein, sondern kann an die Form des Verdichterrades angepasst werden.

Die Erfindung sieht außerdem ein Verfahren zum Betrieb des erfindungsgemäßen Turboladers vor. Der Turbolader weist, wie oben gesagt, mindestens ein Verdichterrad zum Verdichten von Luft auf und das Verdichterrad ist mit einem Elektromotor antreibbar, wobei zwischen Rotor und Stator des Elektromotors ein Rotorspalt angeordnet ist und mindestens 50%, besonders vorzugsweise mindestens 90% des dem Verdichterrad zugeführten Luftmassenstroms in mindestens einem Betriebszustand des Turboladers durch den Rotorspalt geführt werden.

Dieses "Betriebsverfahren" ist bereits in den Vorrichtungsansprüchen angesprochen, dass dort Gesagte gilt für das hier beanspruchte Betriebsverfahren entsprechend. Wichtig ist, dass die oben genannten anteiligen Luftmassenströme von mindestens 50% bzw. mindestens 90% bzw. sogar 100% dem üblichen Betrieb des Turboladers erreicht werden, beispielsweise in einem Betriebszustand, bei dem die Drehzahl des Verdichterrades zwischen 5000 und 300000 U/min, vorzugsweise zwischen 40000 und 200000 U/min beträgt oder auch die Drehzahl eines angeschlossenen Verbrennungsmotors zwischen 50 und 200000 U/min, vorzugsweise zwischen 100 und 15000 U/min bei Hubkolbenmotoren beträgt.

Es sei nochmals betont, dass ein "Turbolader" im Sinne der vorliegenden Erfindung nicht zwangsweise ein von einem Abgasstrom angetriebenes Turbinenrad beinhalten muss. Wichtig ist lediglich, dass mindestens ein (wie auch immer angetriebenes Verdichterrad) zur Zuführung von vorkomprimierter Verbrennungsluft zu einem Verbrennungsmotor im "Turbolader" enthalten ist.

Der erfindungsgemäße Turbolader enthält in einer Weiterbildung ein Turbinenrad sowie ein damit verbundenes Verdichterrad, wobei auf der dem Turbinenrad abgewandten Seite des Verdichterrades ein Elektromotor vorgesehen ist und ein mit dem Verdichterrad drehfest verbundener Rotor des Elektromotors frei auskragend ausgeführt ist.

Der Elektromotor dient dazu, bei einer (z.B. von einer Steuerelektronik festgestellten) höheren Frischluftanforderung eine zusätzliche Beschleunigung des Verdichterrades durch den Elektromotor bereitzustellen. Hierzu sind Elektromotoren günstig, da diese ohne merkliche Anfahrverzögerung mit hohem Drehmoment beschleunigt werden können.

Außerdem ist vorteilhaft, dass der Elektromotor im vorliegenden Fall nicht zwischen dem Turbinenrad und dem Verdichterrad angeordnet ist. Eine solche Anordnung kann zu thermischen Problemen führen und stellt auch eine starke konstruktive Abwandlung von herkömmlichen (rein mechanischen) Turboladern dar. Neben dem erhöhten konstruktiven Aufwand ist der Reparaturaufwand bei solchen Aufbauten erheblich.

Vorteilhaft (aber auch im Rahmen der Erfindung nicht zwingend) ist, dass im vorliegenden Fall in axialer Richtung gesehen eine Abfolge "Turbinenrad, Welle (Lagerung), Verdichterrad, Elektromotor" gegeben ist. Der Elektromotor ist dann im Wesentlichen nur der Umgebungstemperatur ausgesetzt, so dass es hier nicht zu einer thermischen Zersetzung der Statorwicklung etc. kommen kann.

Ein Vorteil liegt in dem frei auskragenden Ende jenseits des Verdichterrades. Hier ist der Rotor des Elektromotors angebracht. Es ist möglich, aber nicht unbedingt notwendig, hier eine weitere Lagerstelle anzubringen, um den Rotor somit beidseitig zu lagern. Eine solche Lagerstelle kann zum einen die elektrischen Eigenschaften des Elektromotors unter Umständen stören und u.U. eine statische Überbestimmung darstellen. Des Weiteren wird die Reibungsarbeit im System erhöht. Außerdem ist auch die Frischluftzuführung durch ein solches Lager u.U. behindert, da entsprechende Streben die Einlassluftöffnung zum Verdichterrad hin verkleinern. Eine solche Lagerstelle, d.h. eine axial beidseitige Lagerung des Verdichterrades, ist allerdings auch gut möglich.

Außerdem ist mit dem "auskragenden" Rotor der konstruktive Unterschied zu rein mechanischen Turboladern denkbar gering, so dass auf diese Weise sehr kostengünstig, modular und leicht reparierbar ein Elektromotor an herkömmliche Turbolader ergänzt werden kann.

Das erfindungsgemäße Antriebssystem enthält neben dem erfindungsgemäßen Turbolader einen Verbrennungskraftmotor. Unter "Verbrennungskraftmotor" soll im Kontext der vorliegenden Erfindung jeglicher Motor verstanden werden, der sowohl Frischluft/Frischgas als auch Abgas benötigt bzw. produziert, so dass ein entsprechender Turbolader hier Anwendung finden könnte. Darüber hinaus enthält das Antriebssystem auch einen Speicher für elektrische Energie. Hier ist vorzugsweise der Elektromotor des Turboladers mit dem Speicher für elektrische Energie verbunden zur Entnahme elektrischer Energie in einem Motorbetrieb des Turboladers und zur Einspeisung elektrischer Energie in einem Generatorbetrieb des Turboladers.

In vielen Betriebszuständen eines Turboladers (z.B. Volllast, Schubbetrieb etc) wird bis zu 30% das Abgas ungenutzt abgeblasen. Mit der beschriebenen Ausführungsform des Turboladers kann die Energie dieses überschüssigen Abgases zusätzlich energetisch genutzt werden, indem der Elektromotor als Generator verwendet wird. Auf diese Weise kann zum einen überschüssige "thermisch/kinetische Energie" als elektrische Energie wieder gewonnen werden, hierdurch wird die Energiebilanz des Antriebssystems erheblich verbessert. Idealerweise kann der Turbolader sogar so ausgelegt sein, dass der im Kraftfahrzeug befindliche Verbrennungsmotor keine zusätzliche Lichtmaschine mehr benötigt.

Besonders vorteilhaft bei diesem Antriebssystem ist auch, wenn der Elektromotor des Turboladers bzw. der mit ihm verbundene elektrische Speicher zusätzlich mit einem elektromotorischen Antrieb eines Kraftfahrzeuges verbindbar ist. Dieser elektromotorische Antrieb kann beispielsweise ein Nabenelektromotor (oder ein anderer im Antriebsstrang vorgesehener Elektromotor) sein, der an einem Antriebsrad des Kraftfahrzeugs befestigt ist. In modernen, so genannten "Hybridfahrzeugen" wird auf diese Weise sowohl eine zusätzliche Bereitstellung von Drehmoment bzw. Motorleistung beim Beschleunigen erzielt, da neben dem Verbrennungskraftmotor auch die elektrischen Nabenmotoren für die Beschleunigung zuständig sind. Bei Bremsvorgängen kann durch das Umschalten der elektrischen Nabenmotoren in den Generatorbetrieb eine Bremswirkung und somit eine Rückgewinnung von kinetischer in elektrische Energie erreicht werden, die in einem entsprechenden Speicher zwischengespeichert wird. Ist nun auch der Elektromotor des Turboladers mit eben diesem Speicher verbunden, kann somit zentral die gesamte elektrische Energie "verwaltet" werden, um diese jederzeit nutzbringend abrufbar zu machen.

Daneben ist es selbstverständlich aber auch möglich, dass das Turboladersystem und die elektrischen Nabenmotoren (bzw. andere Motore im Antriebsstrang) voneinander unabhängige elektrische Speicher haben.

Der erfindungsgemäße Turbolader eignet sich darüber hinaus auch zum Einsatz in modulierbaren Stromerzeugungsanlagen, die mit Brennstoffen wie Erdgas, Flüssiggas, Heizöl aber auch regenerativen Gasen wie Bio-, Klär- und Deponiegas oder Festbrennstoffen wie Hackschnitzel, Holzstückgut, Stroh etc. betrieben werden können. Durch diese Art der Kraft-Wärme-. Kopplung können kostengünstige Anlagen zur Energieerzeugung mit hohem Wirkungsgrad realisiert werden. Der erfindungsgemäße Turbolader kann also auch als Grundmodul einer Mikroturbine für die Kraft-Wärme-Kopplung verwendet werden.

Zur Steuerung der elektrischen Energie, des Ladeund Entladevorgangs bzw. zur Bereitstellung optimalen Drehmoments bei niedrigem Verbrauch ist in dem Antriebssystem vorzugsweise eine Steuerelektronik vorzusehen. Als Regelparameter dienen die Drehzahl von Turbinenrad oder Verdichterrad, Ist-Werte von turbinengehäuseseitigen und verdichtergehäuseseitigen Druckverhältnissen sowie weiteren für den Verbrennungskraftmotor drehmomentrelevanten Kenngrößen.

Eine vorteilhafte Weiterbildung sieht vor, dass Turbinenrad und Verdichterrad dauerhaft drehfest miteinander verbunden sind. Dies bedeutet, dass keine Kupplung zwischen Turbinenrad und Verdichterrad gegeben ist, wodurch der mechanische Aufbau und die Störanfälligkeit des Systems erhöht würden. Stattdessen wird angestrebt, durch einen leichten Rotor, ein leichtes Verdichterrad, eine leichte Welle und ein entsprechend massearmes Turbinenrad die bewegten Drehmassen zu begrenzen.

Das Gehäuse des Turboladers ist vorzugsweise modular aufgebaut, d.h., dass neben einem Turbinengehäuse für das Turbinenrad ein Verdichtergehäuse für das Verdichterrad gegeben ist. Das Turbinengehäuse ist vorzugsweise mit einem Abgaskrümmer verbunden, der von den einzelnen Zylindern des Verbrennungskraftmotors Abgas zum Turbinenrad hinführt. Aufgrund der thermischen Belastung des Turbinengehäuses sind die konstruktiven Anforderungen etwas anders als an das Verdichtergehäuse, das das Verdichterrad umgibt. Die eigentliche Lagerung von Turbinenrad und Verdichterrad findet vorzugsweise ausschließlich zwischen Turbinenrad und Verdichterrad statt. D.h., dass auf der dem Turbinenrad abgewandten Seite des Verdichterrades keine zusätzliche Lagerung gegeben ist, da hier ja der Rotor des Elektromotors frei auskragt. Vorzugsweise ist ein Lagergehäuse zwischen Turbinengehäuse und Verdichtergehäuse vorgesehen, das zur Aufnahme von Lagerelementen für das Turbinenrad und das Verdichterrad dient.

Vorzugsweise enthält der Elektromotor einen Stator, der im Wesentlichen eine zylindrische Form aufweist und der den Rotor konzentrisch umgibt. Hierbei ist vorteilhaft, dass der Stator als Teil der Innenwand des Verdichtergehäuses ausgeführt werden kann. Der Stator kann beispielsweise auch als Einsatz in eine korrespondierende Öffnung des Verdichtergehäuses einsetzbar sein. Vorteilhaft an diesen Ausführungsformen ist, dass nur eine geringstmögliche konstruktive Änderung herkömmlicher mechanischer Turbolader nötig ist, so dass hierdurch insbesondere in der Großserie große Kosten- und Wettbewerbsvorteile realisierbar sind.

Der Rotor des Elektromotors weist vorzugsweise einen Rotormagneten auf, der von einer Armierung umgeben ist. Hierdurch wird der Rotormagnet mechanisch geschützt. Es kann außerdem auf diese Weise auf die Art des Magnetfeldes Einfluss genommen werden. Der Rotormagnet kann so ausgebildet sein, dass er partiell oder auch komplett in das Verdichterrad integriert ist. Besteht das Verdichterrad aus faserverstärktem oder unverstärktem Kunststoff, so kann der Rotormagnet bei der Produktion direkt mit der Kunststoffmasse umspritzt werden, wodurch eine kostengünstige Großserienfertigung ermöglicht wird.

Vorzugsweise ist die Armierung des Rotors "hohlzylinderförmig" ausgeführt.

Fertigungstechnisch ist es vorteilhaft, dass der Rotormagnet innen bereichsweise hohl ist zum Aufstecken auf eine gemeinsame Welle mit dem Verdichterrad. Auf diese Weise ist eine kostengünstige Fertigung möglich.

Das Verdichterrad besteht vorzugsweise aus einem nicht magnetisierbaren Werkstoff, der das Elektromagnetfeld nicht negativ beeinträchtigt. Vorzugsweise kann das Verdichterrad auch aus einem nichtmetallischen Material, vorzugsweise einem verstärkten oder unverstärkten Kunststoff sein.

Eine weitere vorteilhafte Weiterbildung sieht vor, dass der Rotorspalt zwischen Rotor und Stator eine (und zwar die einzige beabsichtigte) Einlassluftöffnung für das Verdichterrad darstellt. Dies bedeutet wiederum, dass der Elektromotor den Luftzustrom kaum behindert und dass keine zusätzlichen Luftzuführöffnungen vorgesehen werden müssen, welche den Strömungswiderstand unnötig erhöhen würden. Es ist daher sogar möglich, dass die Einlassluftöffnung frei von Streben zwischen Rotor und Stator ist. Aufgrund des Wegfalls des "Gegenlagers" ist hier eine solche Verstrebung nicht notwendig. Gleichwohl kann ein solches "Gegenlager", sowohl bei "klassischen" Turboladern mit Turbinen, als auch bei Turboladern, die lediglich als Verdichterstufe ausgelegt sind, zur Anwendung kommen (beispielsweise bei besonders hohen Drehzahlen, kritischen Eigenfrequenzen etc.).

Die angegebenen Längen beziehen sich hier jeweils auf die größten Ausdehnungen bzw. kleinsten Ausdehnungen der beteiligten Elemente, allerdings lediglich im Bereich der elektrisch bzw. magnetisch wirksamen Elemente (also nur beispielsweise des Rotormagneten, eine nachfolgende Verdickung, beispielsweise im Bereich des Verdichterrades) ist hier nicht maßgeblich.

Zur Verringerung der Stromstärke und zur Steigerung der energetischen Effizienz kann hierbei auch die Sollspannung des Elektromotors mehr als 12 V, beispielsweise 24 oder 48 V betragen.

Besonders vorteilhaft ist, dass der Elektromotor vom Motorbetrieb in den Generatorbetrieb umschaltbar ist. Erreicht der Ladedruck (im Turbinengehäuse) einen bestimmten Sollwert, wird unter Verwendung eines rückspeisefähigen Umrichters zusätzliche Energie erzeugt Darüber hinaus kann idealerweise durch die energetische Umwandlung der Bremsenergie auf ein Wastegate/Druckdose zum Abblasen eines überschüssigen Abgasdrucks verzichtet werden.

Die Steuerung des Motor/Generatorbetriebs ermöglicht erstmalig die zeitnahe gezielte Regelung des Aufladevorgangs. Da der Elektromotor vorzugsweise über einen Frequenzumformer geregelt wird, kann die Drehzahl des Verdichters sowie des Turbinenrades und somit der Luftmassenstrom exakt ermittelt werden. Die Steuerung des Aufladevorgangs des Verbrennungsmotors wird vorzugsweise in die zentrale Motorsteuerung integriert. Damit ist es möglich eine kennfeldgesteuerte Aufladung zu realisieren. Somit ist eine exakte Abstimmung und Optimierung der Verbrennungsparameter (Kraftstoffmenge, Luftmenge, Ladedruck, Abgasrückführrate, Zündzeitpunkt etc.) möglich, wodurch eine erhebliche Kraftstoffverbrauchsreduzierung erzielt wird. Dies stellt somit eine aktive Kennfelderweiterung dar, wodurch die Energiebilanz des Verbrennungsmotors erheblich verbessert werden kann. Dieser Regelkreislaufermöglicht die Regelung und Optimierung des gesamten Verbrennungsprozesses innerhalb des Brennraums einer Verbrennungskraftmaschine.

Weitere vorteilhafte Weiterbildungen werden in den übrigen abhängigen Ansprüchen angegeben.

Die vorliegende Erfindung wird nun anhand mehrerer Figuren erläutert. Es zeigen:
- Fig. 1a: eine erste Ausführungsform eines erfindungsgemäßen Turboladers im Teilschnitt;
- Fig. 1b: eine Ansicht des Turboladers aus Fig. 1a gemäß A;
- Fig. 1c: eine Ansicht des Turboladers aus Fig. 1a gemäß B;
- Fig. 1d: eine Teilexplosionszeichnung des Turboladers aus Fig. 1a;
- Fig. 2a: eine zweite Ausführungsform eines erfindungsgemäßen Turboladers im Teilschnitt;
- Fig. 2b: einen Teilexplosionsansicht des Turboladers gemäß Fig.2a;
- Fig. 3a: eine Erläuterung der Proportionen und Anordnung von Rotormagnet, Stator und Verdichterrad;
- Fig. 3b: eine Ausführungsform eines Verdichterrades mit geneigtem Rotor und geneigtem Stator;
- Fign. 4a bis 4c: eine Erläuterung geometrischer Verhältnisse an erfindungsgemäßen Turboladern.
- Fign. 5 und 6: eine weitere Ausführungsform eines erfindungsgemäßen Turboladers als Microturbine für die Energiegewinnung.

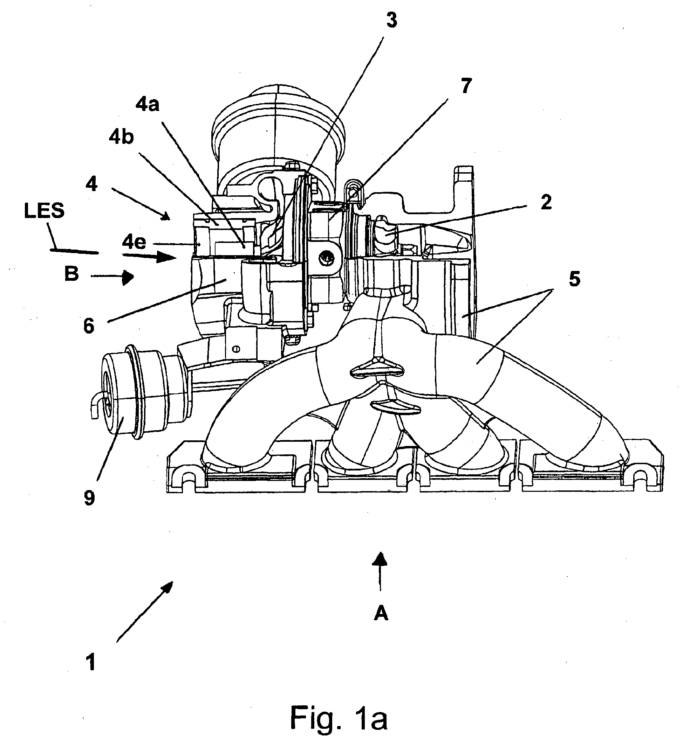

Im Folgenden sollen die Grundzüge der Erfindung anhand der ersten Ausführungsform gemäß Fign. 1a bis 1d gezeigt werden.

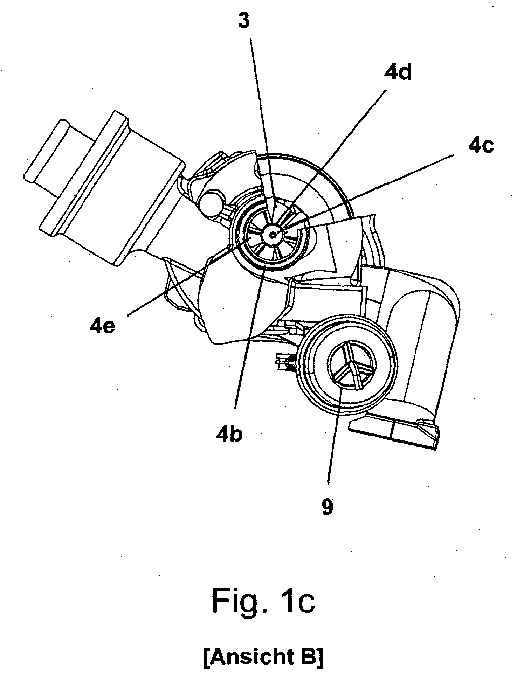

Fign. 1a bis 1d zeigen einen elektrisch modifizierten mechanischen Turbolader 1, der mit einem Turbinengehäuse 5 an einen Verbrennungskraftmotor ankoppelbar ist. Durch den in Fig. 1a gezeigten Abgaskrümmer wird nach der Verbrennung das Abgas gesammelt und zum Antrieb eines Turbinenrades 2 genutzt. Das Turbinenrad 2 ist vom Turbinengehäuse 5 umgeben und ist im Wesentlichen einem herkömmlichen mechanischen Turbolader entnommen. An das Turbinengehäuse 5 schließt sich ein Lagergehäuse 7 und sodann ein Verdichtergehäuse 6 an. In diesem Verdichtergehäuse 6 ist ein Verdichterrad angebracht, das durch eine Einlassöffnung zugeführt Luft (diese Einlassluftöffnung ist insbesondere in Fig. 1c gut zu sehen) mittels eines Verdichterrades 3 verdichtet und auf hier nicht dargstellte Weise zu dem Brennraum des Verbrennungskraftmotors führt. Das Verdichterrad 3 zeigt in Fig. 1a linksseitig einen Fortsatz, an dem ein Rotor 4a eines Elektromotors gegeben ist. Der Rotor 4a ist zentral in der Einlassluftöffnung 4e angebracht. Die Lufteinlassströmungsrichtung ist in Fig. 1a mit LES bezeichnet (hier koaxial zur Achse des Verdichterrades).

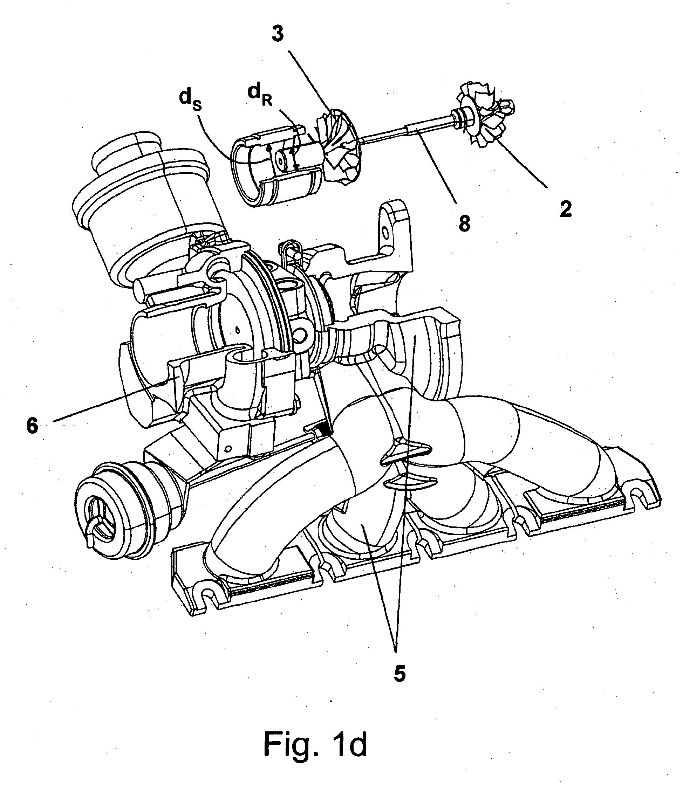

Um den Rotor 4a herum ist ein Stator 4b vorgesehen, der im Wesentlichen eine hohlzylindrische Form aufweist und als Teil der Innenwand des Verdichtergehäuses im Bereich der Einlassluftöffnung dargestellt ist. Vorliegend ist der Stator 4b sogar als Einsatz in eine entsprechende Öffnung vorgesehen, so dass dieser sehr leicht montierbar ist. Vorliegend ist in Fig. 1a also der Rotorspalt zwischen Rotor 4a und Stator 4b die Einlassluftöffnung 4e für das Verdichterrad. Hierbei ist auch gemäß Fig. 1a die Einlassluftöffnung 4e frei von Streben zwischen Rotor und Stator. In dem gezeigten Schnitt ist der kleinste Innendurchmesser des Stators (siehe "d_{S}" in Fig. 1d) beispielsweise 1,5 mal größer als der größte Außendurchmesser d_{R} des Rotors (die Zeichnung ist schematisch und lediglich zur Klarstellung der Größenverhältnisse).

Der Rotor 4a des Elektromotors 4 weist einen Rotormagneten 4c auf, der von einer Armierung umgeben ist (siehe z.B. Fig. 1d). Hierbei ist die Armierung im Wesentlichen "becherförmig" ausgeführt, wobei der Boden des Bechers zum Verdichterrad hin fast vollständig geschlossen ist (abgesehen von einer zentrischen Montagebohrung).

Das Verdichterrad kann (muss aber nicht) aus einem nichtmetallischen Material sein, hier bei einer Ausführung beispielsweise aus einem unverstärkten Kunststoff ist die Beeinflussung des elektromagnetischen Feldes des Elektromotors minimiert. Der Rotormagnet 4c wiederum ist bereichsweise hohl zum Aufstecken auf eine gemeinsame Welle mit dem Verdichterrad. Hier ist in Fig. 1d eine Bohrung 4c des Rotormagneten entsprechend zu sehen. Außerdem ist zu sehen, dass in der Abfolge Rotor (bestehend aus Rotormagnet 4c und Armierung 4d), Verdichterrad 3, Welle 8, Turbinenrad 2 eine Abfolge von Elementen gezeigt ist, die eine thermische Belastung des Elektromotors minimieren. Die Welle 8 ist hierbei in der vorliegenden Ausführungsform so ausgeführt, dass Turbinenrad 2, Verdichterrad 3 sowie Rotor 4a fest (drehfest) miteinander verbunden sind, also durch keine Drehkupplung bzw. Freilauf trennbar sind. Allerdings ist es prinzipiell möglich, eine solche Kupplung im Rahmen der vorliegenden Erfindung vorzusehen, falls beispielsweise die Masse des Turbinenrades 2 sehr hoch ist, hierdurch würde allerdings der konstruktive Aufwand auch wiederum erhöht.

Die Sollspannung des Elektromotors 4 in Fig. 1a beträgt vorliegend 12 V, es sind allerdings auch andere Spannungen (beispielsweise 48 V für Hybridfahrzeuge) möglich.

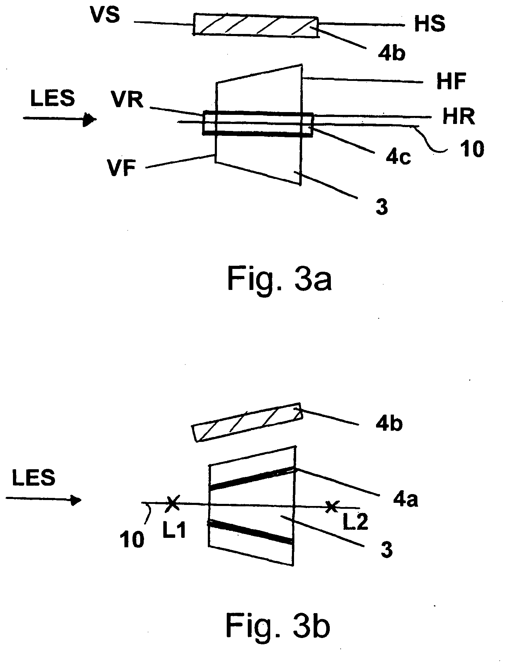

In Fig. 1d ist ein Turbolader mit einer Verdichteranordnung zur Verdichtung von Frischluft für Verbrennungskraftmotoren gezeigt, enthaltend ein Verdichterrad 3 sowie einen Elektromotor 4 mit Rotor 4a und Stator 4b, wobei ein Rotormagnet 4c des Rotors so ausgebildet ist, dass er partiell oder auch komplett in das Verdichterrad integriert ist bzw. mit diesem verbunden ist und der kleinste Innendurchmesser des Stators 1,5 bis 8 mal so groß ist wie der größte Außendurchmesser des Rotors. Die Anordnung des Rotormagneten, des Stators bzw. des Verdichterrades in axialer Richtung ist hierbei variabel, hierzu wird auf die spätere Fig. 3a insbesondere hingewiesen. Die Masse des Rotormagneten 3c (die Gesamtmasse, auch wenn diese aus mehreren Teilen bestehen sollte) beträgt vorliegend 50 g. Das Massenträgheitsmoment des Rotormagneten bezüglich der Achse des Rotors beträgt 0,6 kgmm².

Das Verhältnis der Querschnittsfläche der Einlassöffnung zur Querschnittsfläche des Rotormagneten (V_{QE}) beträgt 7:1. Das Verhältnis der Querschnittsfläche des Stators zur Querschnittsfläche des Rotormagneten beträgt beispielsweise V_{QS} = 16:1.

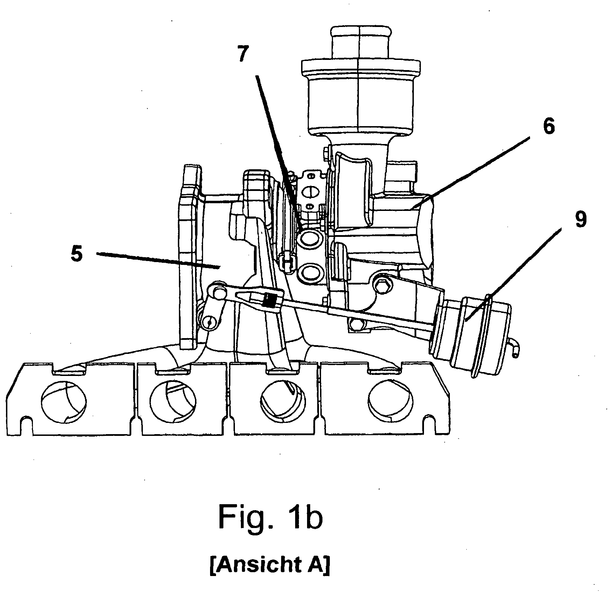

Der Elektromotor ist sowohl im Motorbetrieb (zur Beschleunigung und Vermeidung eines "Turbolochs" als auch im Generatorbetrieb (zur Rückgewinnung von Energie) betreibbar. Erreicht der Ladedruck (im Turbinengehäuse) einen bestimmten Sollwert, wird unter Verwendung eines rückspeisefähigen Umrichters zusätzliche elektrische Energie erzeugt. Idealerweise kann durch dieser energetische Umwandlung der Bremsenergie im Generatorbetrieb auf ein Wastegate/Druckdose zum Abblasen eines überschüssigen Abgasdrucks wie sie in Fig.1b Ziffer 9 dargestellt ist, verzichtet werden.

Der erfindungsgemäße Turbolader findet Anwendung in einem erfindungsgemäßen Antriebssystem für Kraftfahrzeuge, das einen mit dem Turbolader verbundenen Verbrennungskraftmotor sowie einen Speicher für elektrische Energie enthält. Der Elektromotor des Turboladers 1 ist hierbei mit dem Speicher für elektrische Energie verbunden zur Entnahme elektrischer Energie in einem Motorbetrieb des Turboladers 1 und zur Einspeisung elektrischer Energie in einen Generatorbetrieb des Turboladers. In einer besonders bevorzugten Ausführungsform ist der Elektromotor des Turboladers mit einem elektrischen Speicher verbunden, wobei dieser elektrische Speicher zusätzlich mit einem elektromotorischen Antrieb eines Kraftfahrzeugs verbindbar ist. Dies kann ein "Nabenmotor" eines Kraftfahrzeugs sein oder ein anderer Elektromotor, der im Antriebsstrang eines Kraftfahrzeugs (beispielsweise im Bereich des Getriebes) vorgesehen ist. Dieser Anschluss des elektrischen Turboladers an ein "Hybrid"-Fahrzeug ist besonders energieeffizient.

Zur effizienten Steuerung des Antriebssystems bzw. des Turboladers ist eine Steuerelektronik zur Ermittlung der Drehzahl von Turbinenrad 2 oder Verdichterrad 3, Ist-Werten von turbinengehäuseseitigen und verdichtergehäuseseitigen Druckverhältnissen sowie weiteren für den Verbrennungskraftmotor drehmomentrelevanten Werten vorgesehen.

Die wichtigsten Komponenten der ersten Ausführungsform gemäß Fign. 1a bis 1d sind in Fig. 1d, dort oben rechts als Teilexplosionszeichnung gezeigt. Hier ist zu sehen, dass es sich um einen Turbolader 1 handelt, der ein Turbinenrad 2 sowie ein damit verbundenes Verdichterrad 3 aufweist, wobei auf der dem Turbinenrad abgewandten Seite des Verdichterrades ein Elektromotor 4 vorgesehen ist (bestehend aus Rotor 4a und Stator 4b) und einen mit dem Verdichterrad 3 drehfest verbundener Rotor 4a des Elektromotors 4 frei auskragend ausgeführt ist.

Dieses "freie Auskragen" ist vorteilhaft, da damit der konstruktive Aufwand vermindert wird und beispielsweise eine statische Überbestimmung der Gesamtlagerung vermieden wird. Unter "frei auskragend" sollen solche Anordnungen verstanden werden, bei denen der Rotor nicht gesondert und dauernd gelagert wird. Eventuell vorgesehene "Auffangkäfige" etc., die eine zu starke Biegung des frei kragenden Rotors, beispielsweise aufgrund von Biegeresonanzen verhindern sollen, gelten in diesem Sinne nicht als "Lager".

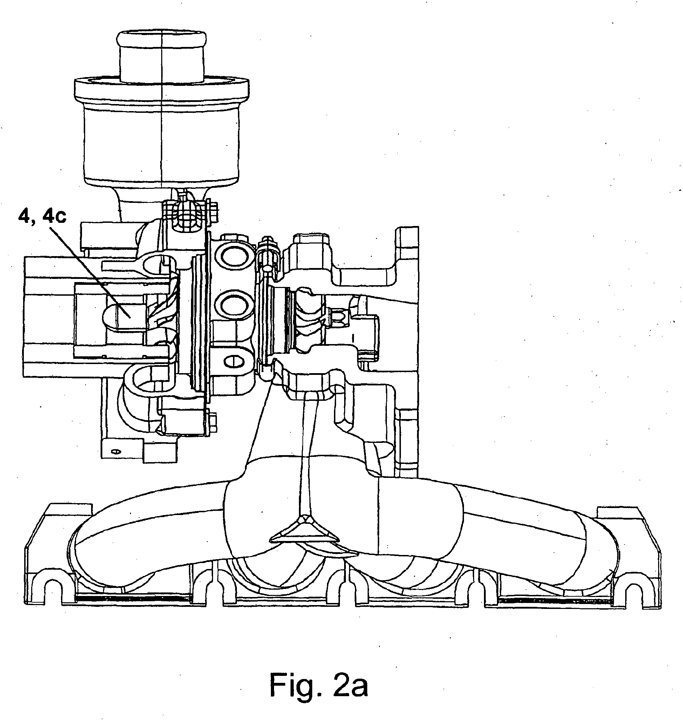

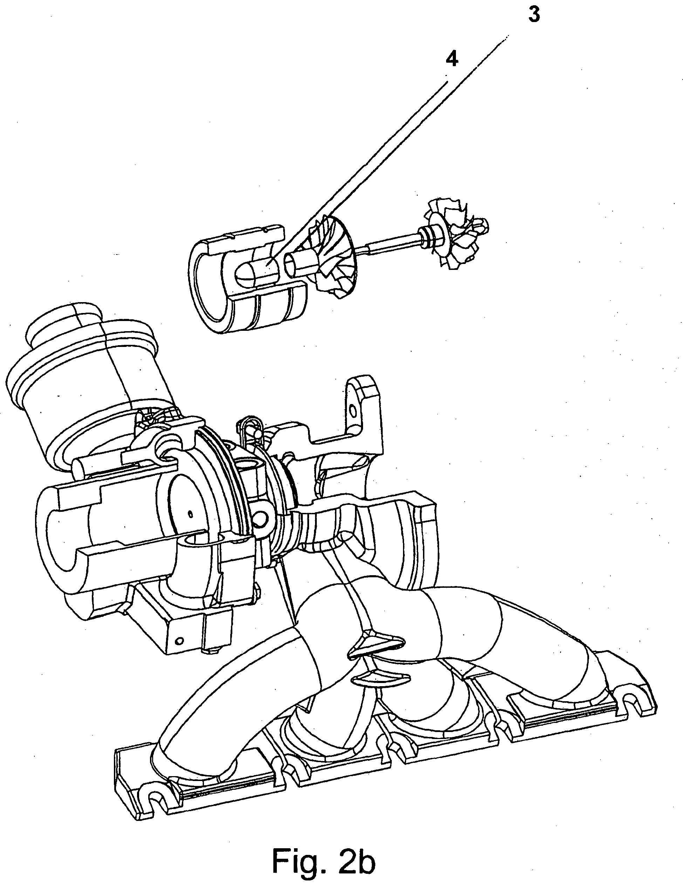

Eine zweite Ausführungsform ist in den Fign. 2a und 2b gezeigt. Hierbei ist der Rotormagnet 4c bei der Herstellung partiell in das Verdichterrad 3 integriert worden. Der Stator bildet die Innenkontur des Verdichtergehäuses.

Der Elektromotor ist sowohl im Motorbetrieb (zur Beschleunigung und Vermeidung eines "Turbolochs" als auch im Generatorbetrieb (zur Rückgewinnung von Energie) betreibbar. Erreicht der Ladedruck (im Turbinengehäuse) einen bestimmten Sollwert, wird unter Verwendung eines rückspeisefähigen Umrichters zusätzliche Energie erzeugt. Durch die energetische Umwandlung der Bremsenergie im Generatorbetrieb kann in dieser Konstruktiönsvariante auf ein Wastegate und eine Druckdose zum Abblasen eines überschüssigen Abgasdrucks wie sie in Fig.1b Ziffer 9 dargestellt ist, verzichtet werden.

Fig. 3a zeigt eine schematische Darstellung von Verdichterrad 3, Stator 4b sowie Rotor 4c zur Veranschaulichung geometrischer Verhältnisse. Gezeigt ist das Verdichterrad, das auf einer Achse 10 einseitig oder beidseitig gelagert ist und in einer Lufteinlassströmungsrichtung LES beströmt wird. Die einfließende Luftströmung wird beschleunigt durch das Verdichterrad 3, das eine Förderstruktur F aufweist. Die Vorderkante der Förderstruktur wird durch VF, die Hinterkante der Förderstruktur durch HF gekennzeichnet. Die Vorderkante des Rotormagneten 4c wird mit VR gekennzeichnet, die Hinterkante des Rotormagneten 4c mit HR. Die Vorderkante des Stators wird mit VS, die Hinterkante des Stators mit HS gekennzeichnet (der Stator ist vorliegenden rotationssymmetrisch, es wurde allerdings hier aus Übersichtlichkeitsgründen der obige Statorschnitt gezeigt). Das Verdichterrad 3 hat also eine Förderstruktur F in Form von Schaufeln, wobei die Vorderkanten VF der Förderstruktur in Lufteinlassströmungsrichtung stromabwärts bezüglich einer magnetisch wirksamen Vorderkante des Rotormagneten 4c und einer magnetisch wirksamen Vorderkante VS des Stators liegen. Das Verdichterrad mit seiner Hinterkante HF liegt dagegen in Lufteinlassströmungsrichtung stromaufwärts bezüglich der Hinterkante HR des Rotormagneten 4c sowie der Hinterkante des Stators 4b.

Es sind hier allerdings auch andere Anordnungen möglich, bei denen Rotormagnet bzw. Stator lediglich über eine Kante des Verdichterrades hinausragen, auch ist es möglich, dass der Rotormagnet vollständig innerhalb des Verdichterrades liegt und also seitlich von Kanten der Förderstruktur eingeschlossen wird.

Fig. 3b zeigt eine weitere Ausführungsform, bei der der Stator 4b (dieser ist rotationssymmetrisch bezüglich der Achse 10) bezüglich der Achse 10 geneigt ist. Der Stator hat hier also im Wesentlichen hohlkegelstumpfförmige Form. Entsprechendes gilt auch für den Rotor 4a bzw. den entsprechenden Rotormagneten, auch dieser ist mit seinen Abschnitten geneigt bezüglich der Achse 10 (also nicht parallel/kolinear, sondern würde diese in Verlängerung schneiden.

Das in Fig. 3b gezeigte Verdichterrad ist beidseitig gelagert (siehe angedeutete Lagerstellen L1 und L2). Allerdings können auch die 'Ausführungsformen der weiteren Figuren prinzipiell beidseitig gelagert sein (auch wenn dies u.U. baulichen Mehraufwand bedeutet).

Für die Fig. 3b gilt, dass der Rotormagnet 4c bezogen auf die Achse 10 des Verdichterrades 3 radial außerhalb der Nabe des Verdichterrades angeordnet ist. Das Verdichterrad ist hierbei so ausgeführt, dass Luft sowohl radial innerhalb als auch radial außerhalb des Rotormagneten führbar ist. Hierbei ist das Verdichterrad auch so ausgeführt, dass mindestens 70% der zugeführten Luftmasse (bzw. des zugeführten Luftmassenstroms) radial außerhalb des Rotormagneten geführt werden.

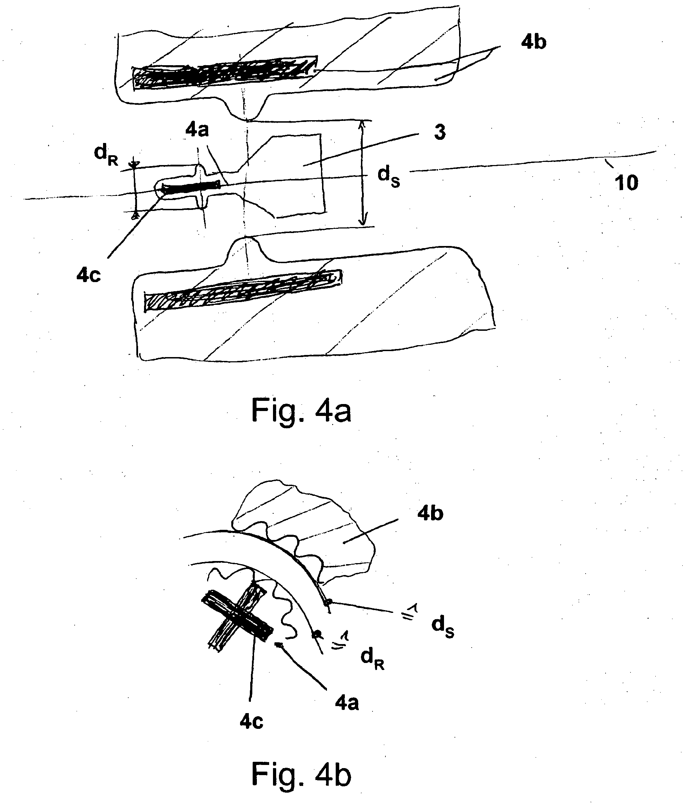

Fig. 4a und 4b dienen der Verdeutlichung der Bestimmung der Durchmessermaße bei nicht durchweg gleichförmigen Geometrien.

Fig. 4a macht klar, dass der größte Durchmesser d_{R} des Rotors an der Stelle gemessen wird, an der dieser Rotor (aber nur im Bereich der Ausdehnung des Rotormagneten) seine größte Ausdehnung hat. Eine spätere Rotorverbreiterung im Bereich des Verdichterrades 3 geht hier nicht ein, da der Rotormagnet dort nicht weitergeführt ist.

Entsprechend ist auch der Stator an der engsten Stelle gemessen (siehe d_{S}) über die sich das entsprechende elektrisch bzw. magnetisch wirksame Bauteil des Stators (angedeutet durch den schwarzen Balken der einen Blechkern mit Kupferdraht zeigt) erstreckt.

Fig. 4b zeigt eine nähere Erläuterung für nichtkreisrunde Querschnitte. Mit "größter Außendurchmesser" des Rotormagneten ist der Durchmesser gemeint, der den kleinsten umschreibenden Kreis um den Gesamtrotor zeigt (zur axialen Positionierung, siehe oben, Beschreibung zu 4a). Die in Fig. 4b gezeigte wellige Außenlinie ist nicht kreisrund, der umbeschriebene Kreis tangiert im Wesentlichen herausragende Stellen des Außenrotors.

Entsprechendes gilt für den Stator 4b, der ebenfalls keine kreisrunde Form hat. Hier wird der größte einbeschriebene Kreis als Durchmesser d_{S} angenommen.

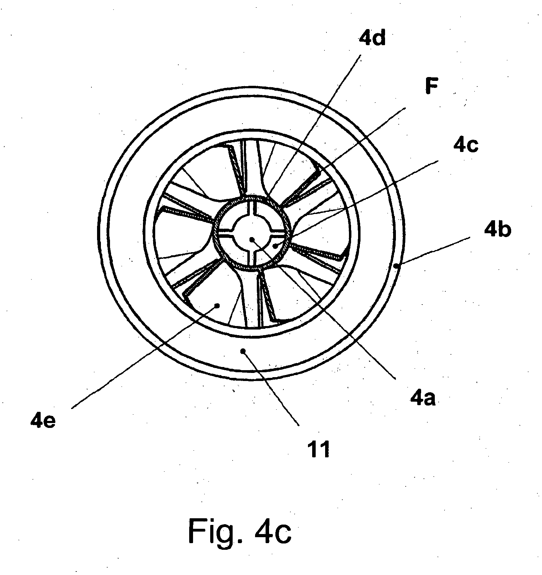

Fig. 4c zeigt nochmals einen Querschnitt durch einen erfindungsgemäßen Stator 4b und Rotor 4a. Zu sehen ist hier ein Rotormagnet 4c, der aus einzelnen Segmenten (drei über den Umfang verteilt) besteht. Alternativ hierzu ist natürlich auch ein z.B. zylindrischer Einzelmagnet vorstellbar. Um diesen Rotormagneten 4c herum ist eine Armierung 4d angebracht. Auf dieser Armierung wiederum ist eine Förderstruktur F (hier im Schnitt, deshalb schraffiert) gezeigt. Um die Förderstruktur herum ist eine Luftdurchführung bzw. Mediendurchlassöffnung 4e gegeben, diese wird radial nach außen von einer Abschirmung 11 (diese ist aus Kunststoff und magnetisch/elektrisch isolierend) umgeben. Um die Abschirmung 11 herum ist der elektrisch wirksame Teil des Stators 4b gegeben.

In dem in Fig. 4c gezeigten Querschnitt beträgt die Querschnittsfläche der Mediendurchlassöffnung bzw. des Luftdurchtrittes bzw. der Einlassöffnung 4e zur Querschnittsfläche der vier Segmente des Rotormagneten (definiert als V_{QE} = A_{Einlassöffnung}/A_{Rotormagnet}) = 4:1.

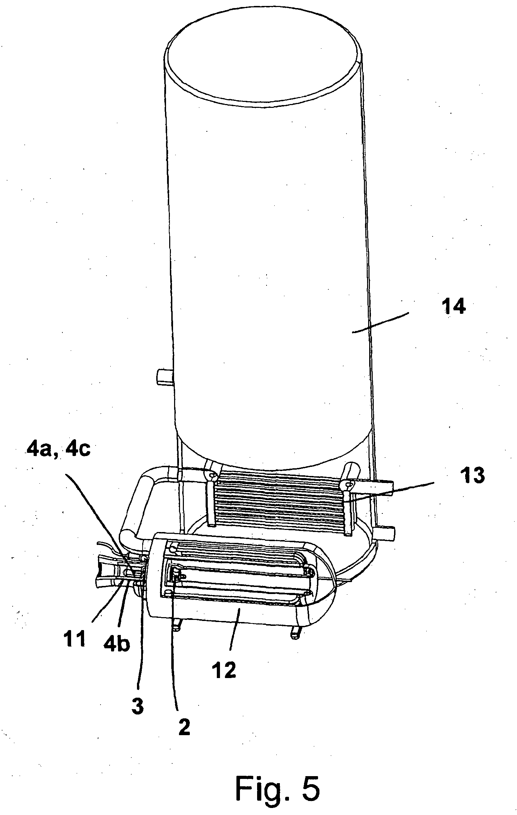

Die Einlassöffnung 4e ist hierbei definiert als tatsächlich durchströmbare Öffnung, also der Flächeninhalt innerhalb der Armierung 11, jedoch abzüglich der Flächen der schraffierten Förderstruktur sowie der Nabe des Rotors (die Nabe umfasst die Armierung 4d sowie alles darin Befindliche). Gemeint ist hier also die "Nettoquerschnittfläche" der Einlassöffnung. Der Querschnitt verläuft in der Fig. 5c sichtbar durch den elektrisch und magnetisch wirksamen Abschnitt des Stators 4b. In diesem Querschnitt beträgt das Verhältnis der Querschnittsfläche des Stators zur Querschnittsfläche des Rotormagneten (definiert als V_{QS} = A_{Stator}/A_{Rotormagnet}) = 13:1.

Als Querschnittsfläche des Stators wird hier lediglich der elektrisch bzw. magnetisch wirksame Teil (also Kernmetall + Kupferdraht, allerdings abzüglich Kupferdrahtlackierung sowie möglicher "Hohlflächen") verstanden. Entsprechend verhält es sich bei dem Rotormagneten, hier sind nur die Querschnitte der reinen Rotormagnetsegmente in diesem Querschnitt heranzuziehen.

Sämtliche in den Figuren gezeigten Turbolader enthalten mindestens ein Verdichterrad 3 zum Verdichten von Luft und sind mit dem Elektromotor 4 antreibbar, wobei zwischen Rotor 4a und Stator 4b des Elektromotors ein Rotorspalt angeordnet ist und mindestens 50%, vorzugsweise mindestens 90% des dem Verdichterrad zugeführten Luftmassenstroms in mindestens einem Betriebszustand des Turboladers durch den Rotorspalt geführt werden. Bei den Darstellungen in den Figuren ist dieser Betriebszustand bei einer Drehzahl zwischen 5000 und 300000 U/min, vorzugsweise zwischen 40000 und 200000 U/min, vorliegend bei 100000 U/min gegeben. Die Drehzahl der Kurbelwelle eines angeschlossenen Hubkolbenmotorsmotors beträgt hierbei zwischen 100 und 15000 U/min, vorzugsweise zwischen 1500 und 8000 U/min, vorliegend beispielsweise 2500 U/min.

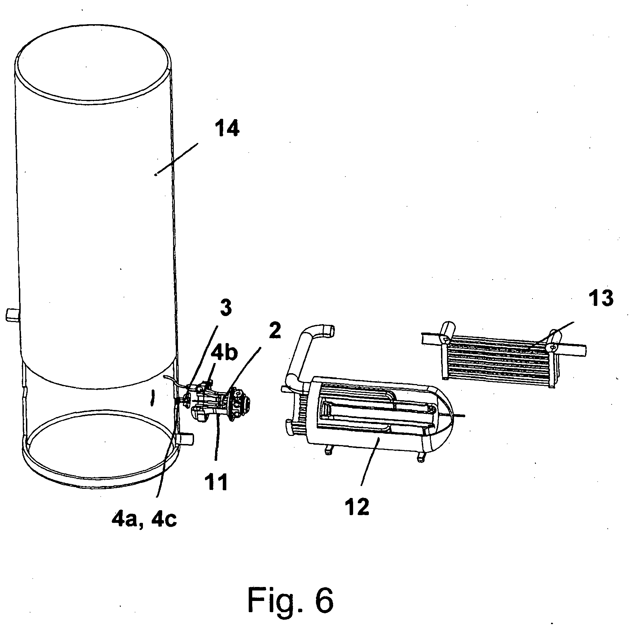

Fign. 5 und 6 zeigen den erfindungsgemäßen Turbolader als Grundmodul einer Mikroturbine für die Kraft-Wärme-Kopplung. Fig. 5 zeigt den Grundaufbau, Fig. 6 eine erläuternde Explosionsansicht. Ein Elektromotor/Generator ist mit dem Bezugszeichen 11 gekennzeichnet, ein Rekuperator mit dem Bezugszeichen 12, ein Wärmetauscher mit dem Bezugszeichen 13 und ein Wärmespeicher mit dem Bezugszeichen 14. In den Figuren sind daher die maßgeblichen Teile (Rotor, Stator, Verdichterrad, Turbinenrad) mit denselben Bezugszeichen wie in den vorhergehenden Ausführungsbeispielen gekennzeichnet. Die Funktionsweise ist, in anderen Worten formuliert, wie folgt (wichtig ist hier nicht primär die Funktion der Kraft-Wärme-Kopplung, sondern die Tatsache, dass der erfindungsgemäße Turbolader, der hier ein Verdichterrad und ein Turbinenrad zeigt, auch außerhalb des Automobils eingesetzt werden kann.

Die Verbrennungsluft strömt vollständig zwischen Rotor und Stator des Elektromotors/Generators 11 in den Verdichter. Durch die dort erfolgte Verdichtung auf ca. 4bar erwärmt sich die Verbrennungsluft bereits auf ca. 200°C. Aus dem Verdichter wird die erwärmte Verbrennungsluft in einen ersten Wärmetauscher geleitet und durch die vorbeiströmenden heißen Abgase auf ein Temperaturniveau von ca. 500°C angehoben. In einer nachgeschalteten Brennkammer wird die Verbrennungsluft gemeinsam mit einem Brennstoff z.B. regenerativem Gas verbrannt. Die so entstandenen heißen Gase werden in der Turbine entspannt und treiben das Turbinenrad und somit den Verdichter sowie den Generator an. Die Wärmeenergie des Abgases wird teilweise in dem Wärmetauscher direkt wieder an die komprimierte Verbrennungsluft abgegeben. Darüber hinaus kann dieser erfindungsgemäße Turbolader mit einem zweiten Wärmetauscher gekoppelt werden um die gesamte Restwärme zur Warmwassererzeugung zu nutzen oder sie einem Heizkreis z.B. für die Gebäudetemperierung zuzuführen. Zum Starten des Prozesses kann der Generator als Elektromotor verwendet. Somit können mit dem erfindungsgemäßen Turbolader beispielsweise kostengünstige kleine Blockheizkraftwerke erzeugt werden, deren wesentlichen Komponenten aus Grosserienbauteile aus der Automobilindustrie bestehen. Durch den schwingungsarmen Lauf wird die Geräuschemission sowie die Körperschallübertragung in angrenzende Gebäude vermieden. Durch die kompakte Bauweise und das geringe Gewicht eignet sich das Modul auch als Hilfsantrieb zur Stromerzeugung in Flugzeugen.

## Patentansprüche

1. Turbolader mit einer Verdichteranordnung zur Verdichtung von Frischluft für Verbrennungskraftmotoren, enthaltend ein Verdichterrad (3) sowie einen Elektromotor (4), mit Rotor (4a) und Stator (4b), wobei ein Rotormagnet (4c) des Rotors so ausgebildet ist, dass er partiell oder auch komplett in das Verdichterrad integriert ist, dadurch gekenzeichnet, dass der kleinste Innendurchmesser des Stators 1,5- bis 8-mal so groß ist wie der größte Außendurchmesser des Rotors.

2. Turbolader nach Anspruch 1, **dadurch gekennzeichnet, dass** der Rotorspalt so ausgestaltet ist, dass bei rotierendem Verdichterrad mindestens 50 %, vorzugsweise mindestens 90 % von zu verdichtendem Luftmassenstrom durch den Rotorspalt geführt werden.

3. Turbolader nach Anspruch 1 oder 2, **dadurch gekennzeichnet, dass** der Turbolader ein Turbinenrad (2) aufweist und das mindestens eine Verdichterrad (3) damit verbunden ist, wobei auf der dem Turbinenrad abgewandten Seite des Verdichterrades der Elektromotor angeordnet ist.

4. Turbolader nach einem der vorhergehenden Ansprüche, **dadurch gekennzeichnet, dass** der Rotor (4a) mit dem Verdichterrad (3) drehfest verbunden ist und frei auskragend ausgeführt ist.

5. Turbolader nach einem der vorhergehenden Ansprüche, **dadurch gekennzeichnet, dass** ein Turbinenrad (2) vorgesehen ist und mit dem Verdichterrad (3) dauerhaft drehfest miteinander verbunden ist.

6. Turbolader nach einem der vorhergehenden Ansprüche, **dadurch gekennzeichnet, dass** dieser ein Gehäuse aufweist, das ein Turbinengehäuse (5) für ein Turbinenrad (2) sowie ein Verdichtergehäuse (6) für das Verdichterrad (3) enthält.

7. Turbolader nach einem der vorhergehenden Ansprüche, **dadurch gekennzeichnet, dass** die Lagerung von einem Turbinenrad (2) und/oder Verdichterrad (3) ausschließlich im Bereich zwischen einem Turbinenrad(2) und Verdichterrad (3) gegeben ist.

8. Turbolader nach Anspruch 7, **dadurch gekennzeichnet, dass** zwischen Turbinengehäuse (5) und Verdichtergehäuse (6) ein Lagergehäuse (7) vorgesehen ist zur Aufnahme von Lagerelementen für Turbinenrad (2) und Verdichterrad (3).

9. Turbolader nach einem der vorhergehenden Ansprüche, **dadurch gekennzeichnet, dass** der Rotor (4a) des Elektromotors (4) einen Rotormagneten (4c) aufweist, der von einer Armierung (4d) umgeben ist (Figur 1d).

10. Turbolader nach einem der vorhergehenden Ansprüche, **dadurch gekennzeichnet, dass** der Elektromotor (4) einen Stator (4b) enthält und der Stator (4b) im Wesentlichen eine hohlzylindrische Form aufweist.

11. Turbolader nach Anspruch 10, **dadurch gekennzeichnet, dass** der Stator (4b) als Teil der Innenwand des Verdichtergehäuses (6) ausgeführt ist.

12. Turbolader nach einem der Ansprüche 10 oder 11, **dadurch gekennzeichnet, dass** der Stator (4b) als Einsatz in eine korrespondierende Öffnung des Verdichtergehäuses (6) einsetzbar ist.

13. Antriebssystem für Kraftfahrzeuge, enthaltend einen Verbrennungskraftmotor, einen Speicher für elektrische Energie sowie einen Turbolader (1) nach einem der vorhergehenden Ansprüche, **dadurch gekennzeichnet, dass** der Elektromotor (4) des Turboladers (1) mit dem Speicher für elektrische Energie verbunden ist zur Entnahme elektrischer Energie in einem Motorbetrieb des Turboladers (1) und zur Einspeisung elektrischer Energie in einem Generatorbetrieb des Turboladers (1).

14. Verfahren zum Betrieb eines Turboladers nach einem der Ansprüche 1 bis 12, wobei der Turbolader (1) mindestens ein Verdichterrad (3) zum Verdichten von Luft aufweist und das Verdichterrad mit einem Elektromotor (4) antreibbar ist, wobei zwischen Rotor (4a) und Stator (4b) des Elektromotors ein Rotorspalt angeordnet ist und mindestens 50 %, vorzugsweise mindestens 90 % des dem Verdichterrad zugeführten Luftmassenstroms in mindestens einem Betriebszustand des Turboladers durch den Rotorspalt geführt werden.

15. Verwendung eines Turboladers nach einem der Ansprüche 1 bis 12 als Grundmodul einer Mikroturbine für die Kraft-Wärme-Kopplung.

## Claims

1. A turbocharger with a compressor arrangement for compressing fresh air, for internal combustion engines, comprising a compressor wheel (3) as well as an electric motor (4) with rotor (4a) and stator (4b), wherein a rotor magnet (4c) of the rotor is designed such that it is partially or also completely integrated into the compressor wheel, **characterised in that** the smallest inner diameter of the stator is 1.5- to 8-times as large as the largest outer diameter of the rotor.

2. A turbocharger according to claim 1, **characterised in that** the rotor gap is designed such that with a rotating compressor wheel, at least 50%, preferably at least 90% of the air mass flow to be compressed is led through the rotor gap.

3. A turbocharger according to claim 1 or 2, **characterised in that** the turbocharger comprises a turbine wheel (2) and the at least one compressor wheel (3) is connected thereto, wherein the electric motor is arranged on the side of the compressor wheel not facing the turbine wheel.

4. A turbocharger according to one of the preceding claims, **characterised in that** the rotor (4a) is connected to the compressor wheel (3) in a rotationally fixed manner, and is designed in a freely projecting manner.

5. A turbocharger according to one of the preceding claims, **characterised in that** a turbine wheel (2) is provided, and is permanently connected to the compressor wheel (3) in a rotationally fixed manner.

6. A turbocharger according to one of the preceding claims, **characterised in that** this comprises a housing, which contains a turbine housing (5) for a turbine wheel (2), as well as a compressor housing (6) for the compressor wheel (3).

7. A turbocharger according to one of the preceding claims, **characterised in that** the mounting of a turbine wheel (2) and/or compressor wheel (3) is given exclusively in the region between a turbine wheel (2) and compressor wheel (3).

8. A turbocharger according to claim 7, **characterised in that** a bearing housing for receiving bearing elements for the turbine wheel (2) and compressor wheel (3), is provided between the turbine housing (5) and the compressor housing (6).

9. A turbocharger according to one of the preceding claims, **characterised in that** the rotor (4a) of the electric motor (4) comprises a rotor magnet (4c), which is surrounded by a sheathing (4d) (Figure 1d).

10. A turbocharger according to one of the preceding claims, **characterised in that** the electric motor (4) contains a stator (4b), and the stator (4b) has essentially a hollow-cylindrical shape.

11. A turbocharger according to claim 10, **characterised in that** the stator (4b) is designed as part of the inner wall of the compressor housing (6).

12. A turbocharger according to one of the claims 10 or 11, **characterised in that** the stator (4b) may be applied as an insert into a corresponding opening of the compressor housing (6).

13. A drive system for motor vehicles, containing an internal combustion engine, a storage device for electrical energy, as well as a turbocharger (1) according to one of the preceding claims, **characterised in that** the electric motor (4) of the turbocharger (1) is connected to the storage device for the electrical energy for taking the energy in a motor operation of the turbocharger (1), and for feeding-in electrical energy in a generator operation of the turbocharger (1).

14. A method for the operation of a turbocharger according to one of the claims 1 to 12, wherein the turbocharger (1) comprises at least one compressor wheel (3) for compressing air, and the compressor wheel may be driven by an electric motor (4), wherein a rotor gap is arranged between the rotor (4a) and the stator (4b) of the electric motor, and at least 50 %, preferably at least 90 % of the air mass flow led to the compressor wheel, is led through the rotor gap in at least one operating condition of the turbocharger.

15. The use of a turbocharger according to one of the claims 1 to 12 as a basic module of a micro-turbine for power/heat cogeneration.

## Revendications

1. Turbocompresseur avec un dispositif de compresseur pour la compression d'air frais des moteurs à combustion, comprenant une roue de compresseur (3) ainsi qu'un moteur électrique (4), avec un rotor (4a) et un stator (4b), un aimant de rotor (4c) du rotor étant conçu de façon à ce qu'il soit intégré partiellement ou entièrement dans la roue du compresseur, **caractérisé en ce que** le diamètre intérieur le plus petit du stator est de 1,5 à 8 fois supérieur au diamètre intérieur le plus grand du rotor.

2. Turbocompresseur selon la revendication 1, **caractérisé en ce que** le jeu du rotor est conçu de façon à ce que, lorsque la roue de compresseur est en rotation, au moins 50 %, de préférence au moins 90 % du débit massique d'air à comprimer soit guidé par le jeu du rotor.

3. Turbocompresseur selon la revendication 1 ou 2, **caractérisé en ce que** le turbocompresseur comprend une roue de turbine (2) et l'au moins une roue de compresseur (3) est reliée à celle-ci, le moteur électrique étant disposé sur le côté de la roue de compresseur opposé à la roue de turbine.

4. Turbocompresseur selon l'une des revendications précédentes, **caractérisé en ce que** le rotor (4a) est relié de manière solidaire en rotation à la roue du compresseur (3) et est conçu de façon à être en porte-à-faux.

5. Turbocompresseur selon l'une des revendications précédentes, **caractérisé en ce qu'**une roue de turbine (2) est prévue et reliée de manière durable et solidaire en rotation à la roue du compresseur (3).

6. Turbocompresseur selon l'une des revendications précédentes, **caractérisé en ce que** celui-ci comprend un carter qui comprend un carter de turbine (5) pour une roue de turbine (2) ainsi qu'un carter de compresseur (6) pour la roue du compresseur (3).

7. Turbocompresseur selon l'une des revendications précédentes, **caractérisé en ce que** le logement d'une roue de turbine (2) et/ou d'une roue de compresseur (3) est assuré exclusivement dans la zone entre une roue de turbine (2) et une roue de compresseur (3).

8. Turbocompresseur selon la revendication 7, **caractérisé en ce que**, entre le carter de turbine (5) et le carter du compresseur (6), se trouve un carter de palier (7) pour le logement d'éléments de palier de la roue de turbine (2) et de la roue du compresseur (3).

9. Turbocompresseur selon l'une des revendications précédentes, **caractérisé en ce que** le rotor (4a) du moteur électrique (4) possède un aimant de rotor (4c) qui est entouré d'une armature (4d) (Figure 1d).

10. Turbocompresseur selon l'une des revendications précédentes, **caractérisé en ce que** le moteur électrique (4) comprend un stator (4b) et le stator (4b) présente globalement une forme cylindrique creuse.

11. Turbocompresseur selon la revendication 10, **caractérisé en ce que** le stator (4b) est conçu comme une partie de la paroi interne du carter de compresseur (6).

12. Turbocompresseur selon la revendication 10 ou 11, **caractérisé en ce que** le stator (4b) peut être inséré en tant qu'insert dans une ouverture correspondante du carter de compresseur (6).

13. Système d'entraînement pour véhicules à moteur, comprenant un moteur à combustion, un accumulateur d'énergie électrique ainsi qu'un turbocompresseur (1) selon l'une des revendications précédentes, **caractérisé en ce que** le moteur électrique (4) du turbocompresseur (1) est relié à l'accumulateur d'énergie électrique pour le prélèvement d'énergie électrique lors du fonctionnement du turbocompresseur (1) en tant que moteur et pour l'alimentation en énergie électrique lors du fonctionnement du turbocompresseur (1) en tant que générateur.

14. Procédé d'exploitation d'un turbocompresseur selon l'une des revendications 1 à 12, le turbocompresseur (1) comprenant au moins une roue de compresseur (3) pour la compression d'air et la roue du compresseur pouvant être entraînée avec un moteur électrique (4), un jeu de rotor étant prévu entre le rotor (4a) et le stator (4b) du moteur électrique et au moins 50 %, de préférence au moins 90 % du débit massique d'air introduit dans la roue de compresseur étant guidé, dans au moins un état de fonctionnement du turbocompresseur, par le jeu du rotor.

15. Utilisation d'un turbocompresseur selon l'une des revendications 1 à 12 en tant que module de base d'une micro-turbine pour la cogénération.
